# EUROPEAN PATENT SPECIFICATION

(11) **EP 4 359 917 B1**
(45) Date of publication and mention of the grant of the patent: **11.03.2026**
(21) Application number: 21946938.4
(22) Date of filing: 23.06.2021
(51) Int. Cl.: G06F 8/658, G06F 8/654, G06F 12/04, G06F 12/06, G06F 12/02

(54) **UPDATING NON-VOLATILE MEMORY IN A COMPUTER CONTROLLED DEVICE**
AKTUALISIERUNG EINES NICHTFLÜCHTIGEN SPEICHERS IN EINER COMPUTERGESTEUERTEN VORRICHTUNG
MISE À JOUR D'UNE MÉMOIRE NON VOLATILE DANS UN DISPOSITIF COMMANDÉ PAR ORDINATEUR

(43) Date of publication of application: 01.05.2024
(73) Proprietor: Red Bend Ltd., 4501307 Hod Ha'Sharon (IL)
(72) Inventor: SALARIOS, Yoav, 5552589 Kiryat Ono (IL); AYUN, Tomer, 5551011 Kiryat Ono (IL)
(74) Representative: Rummler, Felix
(86) International application number: PCT/IL2021/050765
(87) International publication number: WO 2022/269586

(56) References cited:
- EP-A1- 2 381 361
- US-A1- 2004 088 473
- US-A1- 2008 098 160
- US-A1- 2011 179 408
- US-A1- 2012 144 380
- US-A1- 2018 349 129
- US-A1- 2019 265 965

## Description

### TECHNICAL FIELD

Some embodiments described in the present disclosure relate to a computer controlled device and, more specifically, but not exclusively, to a computer controlled vehicle.

### BACKGROUND

The term computer control refers to the use of programmable processing circuitry in the operation of a device. There is a continuous increase in use of computer control in myriad devices and systems, including household appliances, for example a refrigerator and a washing machine, media consumption devices, for example a smart television, personal devices, for example a smart phone, and vehicles.

Henceforth the terms "computerized device" and "device" are used to mean a computer controlled device and the terms are used interchangeably.

A computerized device typically comprises one or more hardware processors configured for executing a code for operating at least part of the device. A computerized device typically comprises non-volatile memory, storing computer instructions to be executed by the one or more hardware processors. Non-volatile memory typically comprises one or more non-volatile memory components, for example a flash memory, a non-volatile Random Access Memory (NVRAM), or an electrically erasable and programmable Read Only Memory (EEPROM). Additionally, or alternatively, the non-volatile memory stores data, for example configuration data, used by the one or more hardware processors when executing the computer instructions.

Over the lifetime of a device there may be a need to update some or all of the content stored in the non-volatile memory, for example to update software controlling operation of the device or to update configuration data used by software controlling operation of the device. Some methods for updating a device require a wired connection to the device, for example via a dedicated serial communication port. As more and more computerized devices have wireless digital communication capabilities, updates are performed increasingly using wireless digital communication networks, for example a Wi-Fi network or a cellular network. Such updates are known as over-the-air (OTA) updates.

US 2019/265965 A1 describe systems/methods pertaining to the features of the preamble of claim 1.

US 2008/098160 A1 discloses methods and devices generating and processing update packages containing multiple updates for updating compressed firmware and file systems in an electronic device.

US 2018/349129 A1 discloses an apparatus for providing firmware update, which includes a state information analysis unit for analyzing device state information received from a firmware update target device; an image creation unit for creating a delta image in units; an update information creation unit; and a communication unit for transmitting the update information and the delta image to the target device.

US 2004/088473 A1 discloses a system and method for updating a binary image stored across a block-structured memory device, such as a flash memory device. The method includes a comparison of original and new images, an update package generation. The update package further includes an array of status bits, thereby allowing for reliable restarting of the update process following power loss or other interruption.

EP 2 381 361 A1 discloses an apparatus and method for downloading an update file using a Firmware Over The Air (FOTA) service of a portable terminal are provided. The apparatus includes a controller and a command analyzer. The controller processes to receive a device management command from an update server. The command analyzer analyzes the received device management command, and determines if the delta information is information valid for the portable terminal based on the checksum information.

US 2011/179408 A1 discloses a firmware updating technique for which consumed memory and writing time are small for devices subject to a firmware update, for which the distributed update size is small, and which is performed via a broadcast network.

US 2012/144380 A1 discloses an apparatus and method for generating a delta file reflecting changes between a prior version of a firmware and a new version of the firmware are provided.

### SUMMARY

The present invention is defined in the independent claims. The dependent claims recite selected optional features. In the following, each of the described methods, systems, apparatuses, examples, aspects and objectives, which do not fully correspond to the invention as defined in the claims is thus not according to the invention and is, as well as the whole following description, present for illustration purposes only or to highlight specific aspects or features of the claims.

It is an object of some embodiments described in the present disclosure to provide a device and a method for applying one or more update instructions, associated with identified non-volatile memory content, to modified non-volatile memory content by reconstructing the identified non-volatile memory content using the modified non-volatile memory content and data change information describing one or more changes between the identified non-volatile memory content and the modified non-volatile memory content.

The foregoing and other objects are achieved by the features of the independent claims. Further implementation forms are apparent from the dependent claims, the description and the figures.

According to a first aspect, a configurable computerized device comprises at least one hardware processor configured for executing a code for updating modified non-volatile memory content by: accessing data change information indicative of at least one modification applied to identified non-volatile memory content, where applying the at least one modification to the identified non-volatile memory content produces the modified non-volatile memory content used by the at least one hardware processor while executing a plurality of firmware computer instructions; and updating the modified non-volatile memory content, comprising: computing reconstructed memory content using the modified non-volatile memory content and the data change information such that the reconstructed memory content is identical to the identified non-volatile memory content; and computing new non-volatile memory content using the reconstructed memory content and at least one memory update instruction associated with the identified non-volatile memory content. Computing the reconstructed non-volatile memory content using data change information allows applying the one or more memory update instructions associated with the identified non-volatile memory content to the modified non-volatile memory content. This method reduces cost of management of the device and of a plurality of devices, as this method reduces a need to provide separate memory update instructions for each of a plurality of modified non-volatile memory contents of a plurality of devices, while still facilitating update of non-volatile memory using one or more memory update instructions. Updating non-volatile memory using one or more memory update instructions and not requiring provisioning of complete new non-volatile memory content reduces an amount of computer resources required for updating the non-volatile memory.

According to a second aspect, a method for updating modified non-volatile memory data, comprises: accessing data change information indicative of at least one modification applied to identified non-volatile memory content, where applying the at least one modification to the identified non-volatile memory content produces modified non-volatile memory content used by at least one hardware processor when executing a plurality of firmware computer instructions; and updating the modified non-volatile memory content, comprising: computing reconstructed memory content using the modified non-volatile memory content and the data change information such that the reconstructed memory content is identical to the identified non-volatile memory content; and computing new non-volatile memory content using the reconstructed memory content and at least one memory update instruction associated with the identified non-volatile memory content.

According to a third aspect, a configurable computerized vehicle comprises at least one hardware processor configured for executing a code for updating modified non-volatile memory content by: accessing data change information indicative of at least one modification applied to the identified non-volatile memory content, where applying the at least one modification to the identified non-volatile memory content produces the modified non-volatile memory content, used by the at least one hardware processor when executing a plurality of firmware computer instructions; and updating the modified non-volatile memory content, comprising: computing reconstructed memory content using the modified non-volatile memory content and the data change information such that the reconstructed memory content is identical to the identified non-volatile memory content; and computing new non-volatile memory content using the reconstructed memory content and at least one memory update instruction associated with the identified non-volatile memory content.

In an implementation form of the first and second aspects, the at least one hardware processor is further configured for storing the new non-volatile memory content to at least one non-volatile memory component connected to the at least one hardware processor. Optionally, the at least one hardware processor is further configured for using the new non-volatile memory content instead of the modified non-volatile memory content when executing the plurality of firmware computer instructions. Using the new non-volatile memory content instead of the modified non-volatile content facilitates on-the-fly update of the non-volatile memory, reducing cost of maintenance of the device and reduces an amount of time a service provided by the device is unavailable. Optionally, the identified non-volatile memory content comprises a first plurality of firmware computer instructions, the modified non-volatile memory content comprises the plurality of firmware computer instructions, executed by the at least one hardware processor and produced by applying at least some of the at least one modification to the first plurality of firmware computer instructions and the new non-volatile memory content comprises a new plurality of firmware computer instructions. Optionally, using the new non-volatile memory content instead of the modified non-volatile memory content comprises executing the new plurality of firmware computer instructions instead of the plurality of firmware computer instructions. Computing the new plurality of firmware computer instructions and executing the new plurality of firmware computer instructions instead of the plurality of firmware computer instructions facilitates on-the-fly updating of firmware for operating the device, increasing usability of the device and reducing cost of management compared to performing offline updating of the device's firmware. Optionally, the at least one hardware processor is further configured for: computing an updated plurality of firmware computer instructions using the new plurality of firmware computer instructions and the data change information; and executing the updated plurality of firmware computer instructions instead of the plurality of firmware computer instructions. Computing the updated plurality of firmware computer instructions using the new plurality of firmware computer instructions and the data change information allows applying the one or more modifications to the new plurality of firmware computer instructions such that the one or more modifications are not lost when applying the one or more update instructions, thus increasing usability of the device.

In another implementation form of the first and second aspects, updating the modified non-volatile memory content is in response to receiving the at least one memory update instruction. Optionally, the device further comprises at least one digital communication network interface connected to the at least one hardware processor. Optionally, the at least one hardware processor is further configured for receiving the at least one memory update instruction via the at least one digital communication network interface. Optionally, the at least one digital communication network interface is connected to a wireless digital communication network. Optionally, the wireless digital communication network is selected from the group of digital communication networks of: a Wi-Fi network, a cellular network. Receiving the at least one memory update instruction via a wireless digital communication network facilitates remote management of the device by a manager, reducing cost of operation compared to a wired connection between the device and the manager.

In a further implementation form of the first and second aspects, the at least one hardware processor is further configured for storing the data change information to at least one non-volatile memory component connected to the at least one hardware processor. Optionally, the data change information comprises the identified non-volatile memory content. Optionally, the data change information comprises a plurality of modification entries, each modification entry comprising one or more of: (1) at least part of the identified non-volatile memory content and identification information indicative of at least part of the modified non-volatile memory content, associated with the at least part of the identified non-volatile memory content; and (2) a plurality of change instructions and other identification information indicative of another part of the modified non-volatile memory content associated with the plurality of change instructions. Using a plurality of modification entries reduces an amount of storage required for storing the data change information compared to storing the entire identified non-volatile memory content, reducing cost of implementation of the device. Optionally, storing the data change information comprises compressing at least one of the plurality of modification entries. Compressing the data change information reduces an amount of storage required for storing the data change information, reducing cost of implementation of the device. Optionally, computing the reconstructed memory content, for at least some of the modified non-volatile memory content, comprises: retrieving the at least some of the modified non-volatile memory content; identifying in the plurality of modification entries at least one modification entry associated with the at least some of the modified non-volatile memory content; and computing respective reconstructed memory content using the at least one modification entry. Optionally, computing the reconstructed memory content comprises for at least one of the plurality of modification entries at least one of: replacing at least part of the modified non-volatile memory content with the at least part of the identified non-volatile memory content associated therewith; applying the plurality of change instructions to the other part of the modified non-volatile memory area associated therewith; and applying the plurality of change instructions to yet another part of the modified non-volatile memory area.

In a further implementation form of the first and second aspects, the at least one hardware processor is further configured for: receiving at least one modification instruction to apply the at least one modification to the identified non-volatile memory content; computing the data change information; and applying the at least one modification to the identified non-volatile memory content. Optionally, the device further comprises memory access circuitry adapted for, in each of a plurality of iterations: receiving information indicative of at least part of the identified non-volatile memory content stored in at least one non-volatile memory component connected to the at least one hardware processor; receiving a modification instruction to apply to the at least part of the identified non-volatile memory content; computing one or more modification entries using the at least part of the identified non-volatile memory content and the modification instruction; modifying the at least part of the identified non-volatile memory content according to the modification instruction; and storing the one or more modification entries. Computing the data change information and applying the at least one modification to the identified non-volatile memory content increases usability of the device by facilitating local modifications without losing the ability to apply a managed update in the form of the at least one update instruction. Optionally, at least some of the data change information is computed by at least one other hardware processor and the at least one hardware processor is further configured for receiving the at least some of the data change information from the at least one other hardware processor. Computing data change information by at least one other hardware processor reduces cost of management of a plurality of devices by facilitating layered management.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which embodiments. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 is a schematic block diagram of an exemplary system, according to some embodiments;
FIG. 2 is a schematic block diagram of some exemplary functional components of a device, according to some embodiments;
FIG. 3 is a schematic block diagram of an exemplary flow of changes to memory content, according to some embodiments;
FIG. 4 is a flowchart schematically representing an optional flow of operations for updating, according to some embodiments;
FIG. 5 is a sequence diagram of an optional flow of operations for updating, according to some embodiments;
FIG. 6 is a flowchart schematically representing an optional flow of operations for modifying, according to some embodiments; and
FIG. 7 is a sequence diagram of an optional flow of operations for modifying, according to some embodiments.

### DETAILED DESCRIPTION

The term "image", as used herewithin, refers to a serialized copy of the contents of non-volatile memory.

A naive approach to updating a device's non-volatile memory is to send a complete image to the device, and replace the existing contents with the received image. However, sending a complete image over a digital communication network is expensive in terms of an amount of communication bandwidth for transferring the complete image and an amount of required storage on the device.

In some other methods for updating a device's non-volatile memory instead of sending the device a complete image, a set of differences between a new image and an identified base image are sent to the device, known as a delta update. Delta updates are useful when an amount of changes to an image is small compared to the entire size of the image. In such delta update methods, the device updates its non-volatile memory using the set of differences. For example, the set of differences may be organized as one or more software patches that the device can apply to the content of its non-volatile memory. In such methods, the content of the device's non-volatile memory must be identical to the identified base image. In some methods the content of the device's non-volatile memory must be identical at a binary level, i.e. identical bitwise. In some methods at least part of the content of the device's non-volatile memory must be identical at a binary level to one or more equivalent parts of the identified base image.

It is not uncommon for a device to be manufactured by an original equipment manufacturer (OEM) and then marketed by another manufacturer. In some fields, an image installed by the OEM of a device may be modified by the other manufacturer, or even by an end user of the device. For example, the other manufacturer may modify the OEM-provided image to add a graphical user interface in a language that is not supported by the OEM-provided image. Additionally, or alternatively, the other manufacturer may modify the OEM-provided image to add a new functionality not provided by the OEM. In another example, an identified image for operating a vehicle is modified differently for each of a plurality of vehicle models. In yet another example, a media-center application in a vehicle may be modified by an owner of the vehicle to configure the vehicle's media-center.

Such modifications produce a modified image that is different from an identified image provided by the OEM or manufacturer. In addition, it should be noted that when an identified change is performed on a plurality of images of a plurality of devices, despite being identical logically and functionally there may be differences between a modified image on one device and another modified image on another device. Such differences may be due to differences in timing and additionally or alternatively differences in behavior of write operations, for example differences in a file system driver between the plurality of devices.

Furthermore, we distinguish between two types of modifications: the term "managed update", as used herewithin, refers to updates initiated by an OEM of a device. The terms "unmanaged update" and "unmanaged modifications", as used herewithin, refer to updates initiated by another manufacturer of the device or an end-user of the device, un-tracked by the OEM.

When an OEM wants to updated a device, in order to use a delta-update method the non-volatile memory content on the device must be identical to an identified content provided by the OEM. However, when one or more unmanaged modifications are applied to content of a device's non-volatile memory, the resulting modified content is different from the identified content provided by an OEM, prohibiting use of a delta-update method to update the device.

To allow both unmanaged updates and managed delta-updates, in some devices the one or more unmanaged modifications are applied as on overlay to the identified non-volatile memory content. Thus, when a hardware processor of the device uses the non-volatile memory content, accessing the non-volatile memory may have two steps - first accessing the overlay and then accessing the identified non-volatile memory content if needed. This approach increases access time to the non-volatile memory during runtime.

To facilitate using a delta-update method to update modified non-volatile memory content, produced by applying one or more unmanaged modifications to an identified non-volatile memory content, in some embodiments described herewithin the present disclosure proposes computing reconstructed memory content that is identical to the identified non-volatile memory content and applying one or more update instructions associated with the identified non-volatile memory content to the reconstructed memory content. Computing a reconstructed memory content that is identical to the identified non-volatile memory content facilitates applying the one or more update instructions that are associated with the identified non-volatile memory content to the modified non-volatile memory content without producing specific update instructions for the modified non-volatile memory content. Applying the one or more update instructions that are associated with the identified non-volatile memory content to the modified non-volatile memory content reduces an amount of digital communication network bandwidth required to update the non-volatile memory of the device. In addition, the method described above allows using the one or more update instructions that are associated with the identified non-volatile memory content to update more than one modified non-volatile memory content, thus reducing cost of operation compared to producing specific update instructions for each of the more than one modified non-volatile memory content. In addition, computing the reconstructed memory content for the purpose of applying the one or more update instructions allows using the modified non-volatile memory content during operation of the device, reducing access time to the non-volatile memory compared to using an overlay. Facilitating support for delta-updates reduces an amount of storage required on the device to store update instructions compared to requiring a full image update, thus reducing cost of implementation of the device.

Optionally, the data change information is stored on the device, for example in a non-volatile memory component. In addition, in some embodiments described herewithin, the present disclosure proposes computing the data change information when receiving one or more unmanaged change instructions. For example, in an embodiment a component for writing to the non-volatile memory receives an instruction to modify the non-volatile memory, and in response to the instruction to modify the non-volatile memory computes the data change information. Optionally, the component for writing to the non-volatile memory comprises a memory access circuitry. Optionally, the component for writing to the non-volatile memory comprises one or more software objects of a code executed by a hardware processor of the device, for example a device driver for accessing the non-volatile memory. Computing the data change information when receiving the one or more unmanaged change instructions increases ease of use of the device as modification of an identified non-volatile memory content may be done without requiring additional actions by an initiator of the modification, for example another manufacturer or an end-user of the device.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code, natively compiled or compiled just-in-time (JIT), written in any combination of one or more programming languages, including an object oriented programming language such as Smalltalk, C++, Java, Object-Oriented Fortran or the like, an interpreted programming language such as JavaScript, Python or the like, and conventional procedural programming languages, such as the "C" programming language, Fortran, or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

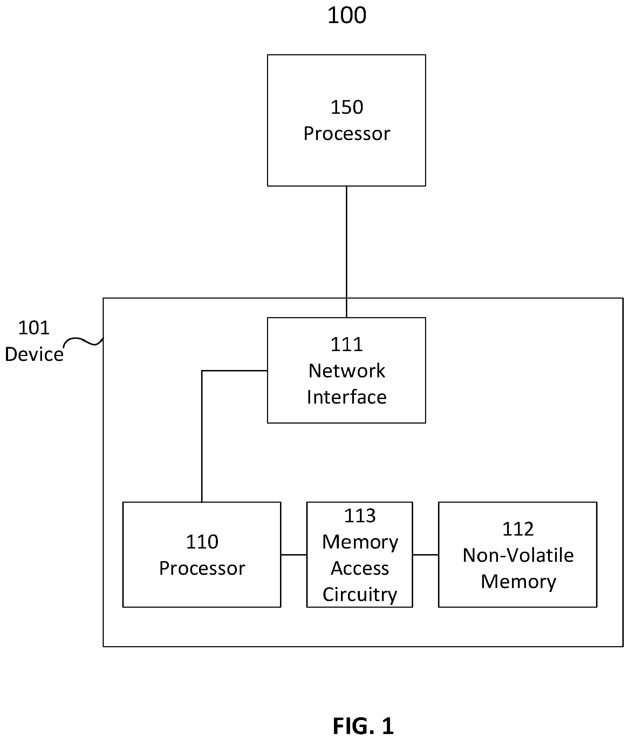

Reference is now made to FIG. 1, showing a schematic block diagram of an exemplary system 100, according to some embodiments. In such embodiments device 101 comprises at least one hardware processor 110 connected to one or more non-volatile memory components 112. For brevity, henceforth the term "processing unit" is used to mean "at least one hardware processor", and the terms are used interchangeably. In addition, the term "non-volatile memory" is used to mean "one or more non-volatile memory components", and the terms are used interchangeably. Optionally, processing unit 110 is connected to non-volatile memory 112 via memory access circuitry 113.

In some embodiments, the content of non-volatile memory 112 comprises a plurality of firmware computer instructions executed by processing unit 110.

Optionally, processing unit 110 is connected to at least one digital communication network interface 111. For brevity, henceforth the term "network interface" is used to mean at least one digital communication network interface, and the terms are used interchangeably.

Optionally, network interface 111 is connected to a wireless digital communication network. Optionally, the wireless digital communication network is a local area network (LAN), for example a Wi-Fi network. Optionally, the wireless digital communication network is a cellular network. Some examples of a cellular network include a Global System for Mobile Communications (GSM) network and a Long Term Evolution (LTE) network. Optionally, the wireless digital communication network is the Internet.

Optionally, device 101 is a vehicle. Optionally, device 101 is a personal device, for example a smartphone. Optionally, device 101 is a household appliance, for example a refrigerator, a washing machine or a climate control system. Optionally, device 101 is a media consumption device, for example a smart television.

In some embodiments, device 101 is connected to another processing unit 150, for example for the purpose of receiving one or more update instructions.

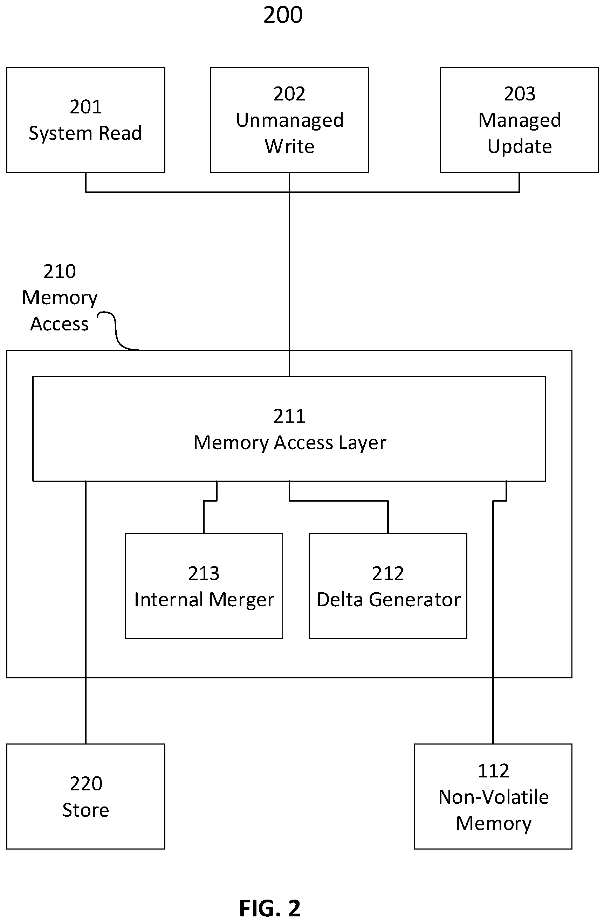

Reference is now made also to FIG. 2, showing a schematic block diagram of some exemplary functional components 200 of a device, according to some embodiments. In such embodiments, a code executed by processing unit 110 optionally comprises memory access function 210, for accessing non-volatile memory 112. Optionally, memory access function 210 comprises memory access layer 211, for interfacing with one or more other parts of code 200.

Optionally, code 200 comprises a system read function 210 for reading from non-volatile memory 112. Optionally, to read from non-volatile memory 112, system read function 201 sends a read request to memory access layer 211 and memory access layer 211 accesses non-volatile memory 112 according to the read request.

Optionally, code 200 comprises unmanaged write function 202 and managed update function 203, both configured to write to non-volatile memory 112 via memory access layer 211. Optionally, memory access function 210 comprises delta generator 212, for computing a difference between content of non-volatile memory 112 and a write request received from unmanaged write function 202. In embodiments where more than one modification may be applied to an identified area in the content of non-volatile memory 112, memory access function 210 may further comprise internal merger 213, for merging between the more than one modification applied to the identified area. Optionally, device 101 further comprises store 220, connected to processing unit 110, optionally for storing data change information describing one or more modifications applied to identified non-volatile memory content to produce modified non-volatile memory content stored in non-volatile memory 112. Optionally, memory access layer 211 accesses store 220. Optionally, store 220 is part of non-volatile memory 112. Store 220 may be another non-volatile memory component.

Optionally, memory access function 210 is implemented in one or more software objects of code executed by processing unit 110, for example in a device driver for accessing non-volatile memory 112 and additionally or alternatively for accessing store 220.

Optionally, memory access circuitry 113 comprises at least part of memory access function 210. In some other embodiments, memory access circuitry 113 comprises all of memory access function 210.

The following drawing describes how content of non-volatile memory 112 changes over time, according to some embodiments.

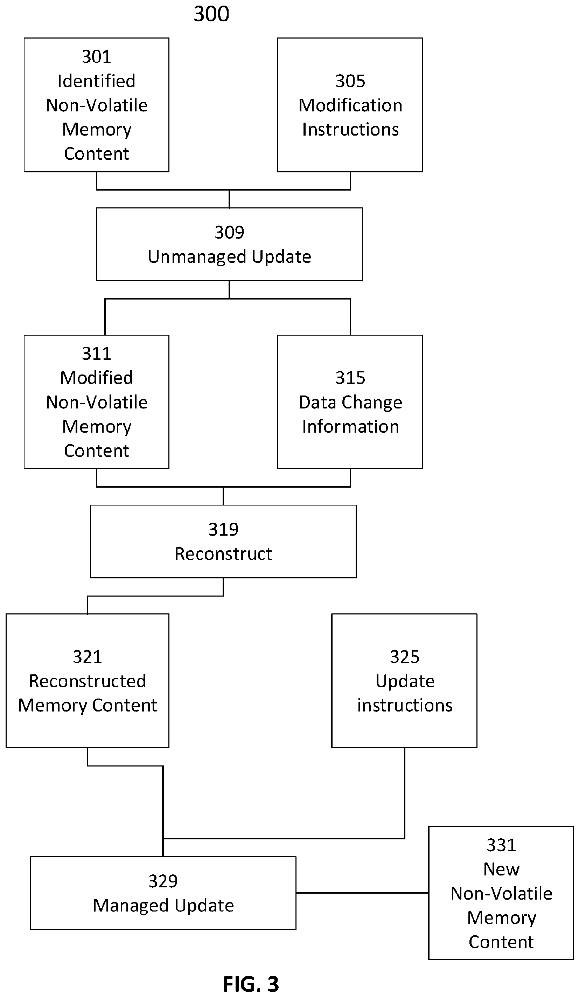

Reference is now made also to FIG. 3, showing a schematic block diagram of an exemplary flow 300 of changes to memory content, according to some embodiments. In such embodiments, content of non-volatile memory 112 comprises identified non-volatile memory content 301. For example, identified non-volatile memory content 301 may comprise an identified version of configuration data, used by processing unit 110 when executing a plurality of firmware computer instructions. Optionally, identified non-volatile memory content 301 comprises a first plurality of firmware computer instructions which are optionally an identified version of the plurality of firmware computer instructions executed by processing unit 110.

According to some embodiments, identified non-volatile memory content 301 may be modified according to one or more modification instructions 305, using unmanaged update 309. Optionally, unmanaged update 309 uses unmanaged write function 202 to execute one or more modification instructions 305. Optionally, executing unmanaged update 309 produces modified non-volatile memory content 311 and data change information 315.

Optionally, data change information 315 comprises identified non-volatile memory content 301. Optionally, data change information 315 comprises a plurality of modification entries, indicative of one or more modifications applied to identified non-volatile memory content 301 by executing one or more modification instructions 305. Optionally, a modification entry comprises at least part of identified non-volatile memory content 301 and identification information indicative of at least part of modified non-volatile memory content 311 associated with the at least part of identified non-volatile memory content 301. For example, when a part of identified non-volatile memory content 301 is replaced by a part of modified non-volatile memory content 311, the part of modified non-volatile memory content 311 is associated with the part of identified non-volatile memory content 301. Identification information may be a memory address. Other examples of identification information are a label and an offset from an identified memory address.

Additionally, or alternatively, a modification entry may comprise a plurality of change instructions and identification information indicative of a part of modified non-volatile memory content 311 associated with the plurality of change instructions. Optionally, a modification entry is additionally, or alternatively, associated with a part of identified non-volatile memory content 301.

According to some embodiments, modified non-volatile memory content 311 comprises the plurality of firmware computer instructions executed by processing unit 110. The plurality of firmware computer instructions may be produced by executing at least some of one or more modification instructions 305 to apply one or more modifications to the first plurality of firmware computer instructions.

In some embodiments, modified non-volatile memory content 311 is stored in non-volatile memory 112. Optionally, data change information 315 is stored in storage 220. Optionally, modified non-volatile memory content 311 is produced in a plurality of modification iterations, each executing at least some of one or more modification instructions 305.

Further in such embodiments, when there is a need to apply one or more update instructions 325, reconstruction 319 may compute reconstructed memory content 321 using modified non-volatile memory content 311 and data change information 315. Reconstructed memory content 321 may be identical to identified non-volatile memory content 301. Optionally, reconstructed memory content 321 is bitwise identical to identified non-volatile memory content 301, at a binary level. Optionally, reconstructed memory content 321 is identical to identified non-volatile memory content 301at instruction level.

In such embodiments, managed update 329 applies one or more update instructions 325 to reconstructed memory content 321 to produce new non-volatile memory content 331. Optionally, new non-volatile memory content 331 is stored in non-volatile memory 112. In some embodiments, new non-volatile memory content 331 comprises a new plurality of firmware computer instructions.

To update modified non-volatile memory content, in some embodiments device 110 implements the following optional method.

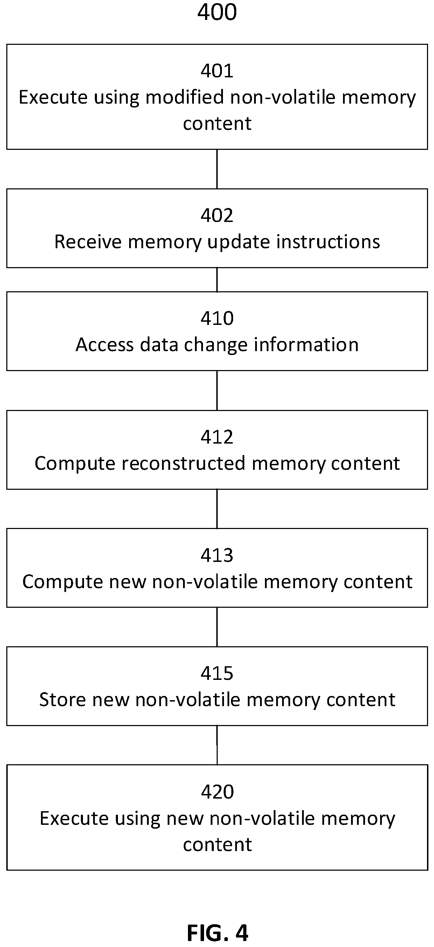

Reference is now made also to FIG. 4, showing a flowchart schematically representing an optional flow of operations 400 for updating, according to some embodiments. In such embodiments, in 401 processing unit 110 executes a plurality of firmware computer instructions. Optionally, the plurality of firmware computer instructions is at least part of the content of non-volatile memory 112. In 410 processing unit 110 accesses data change information. The data change information may be indicative of one or more modifications applied to identified non-volatile memory content 301, for example by executing one or more modification instructions 305. Optionally, applying the one or more modifications to identified non-volatile memory content 301 produces modified non-volatile memory content 311. Optionally, modified non-volatile memory content 311 is stored in non-volatile memory 112. Optionally, processing unit 110 uses modified non-volatile memory content 311 when executing the plurality of firmware computer instructions, for example when modified non-volatile memory content 311 comprises the plurality of firmware computer instructions.

Optionally, processing unit 110 accesses the data change information by accessing non-volatile memory 112. Optionally, processing unit 110 accesses the data change information by accessing storage 220. Optionally, processing unit 110 accesses the data change information by accessing a volatile memory component connected to processing unit 110, for example a random access memory (RAM) component. Optionally, processing unit 110 receives the data change information from yet another processing unit, for example other processing unit 130. Optionally, processing unit 110 receives the data change information with the one or more memory update instructions in 402. Optionally, processing unit 110 stores the data change information on storage 220 or non-volatile memory 112 or both. When the data change information comprises a plurality of modification entries, processing unit 110 may compress at least one of the plurality of modification entries when storing to storage 220 or non-volatile memory 112 or both.

Optionally, processing unit 110 updates modified non-volatile memory content 311. To do so, in 412 processing unit 110 optionally computes reconstructed memory content 321. Optionally, processing unit 110 uses data change information 315 and modified non-volatile memory content 311 to compute reconstructed memory content 321.

Optionally, computing reconstructed memory content 321 comprises executing a plurality of reconstruction iterations, each for at least some of modified non-volatile memory content 311.

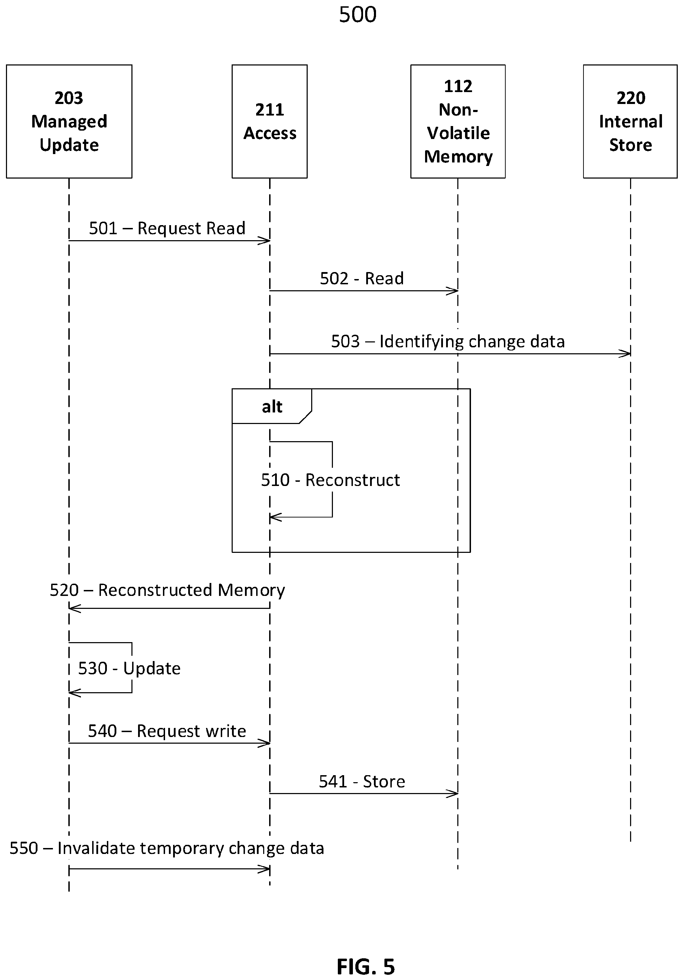

Reference is now made also to FIG. 5, showing a sequence diagram of an optional flow of operations 500 for updating, according to some embodiments. In such embodiments, computing reconstructed memory content 321 comprises managed update function 203, executed by processing unit 110, sending read request 501 to memory access layer 211. In response to read request 501, memory access layer 211 optionally retrieves in 502 at least some of modified non-volatile memory 311 from non-volatile memory 112. In 503, memory access layer 211 optionally identifies in the plurality of modification entries at least one modification entry associated with the at least some of modified non-volatile memory 311. In 510, memory access layer 211 computes respective reconstructed memory content using the at least one modification entry.

Computing the respective reconstructed memory content may comprise replacing the at least some of modified non-volatile memory 311 with the at least part of identified non-volatile memory content 301 associated therewith in the at least one modification entry. Optionally, computing the respective reconstructed memory content comprises applying the plurality of change instructions of the at least one modification entry to the at least part of modified non-volatile memory area 311 associated therewith in the at least one modification entry. The at least part of modified non-volatile memory area 311 associated with the at least part of identified non-volatile memory content 301 may have a common memory address as the at least part of identified non-volatile memory content 301. Optionally, the at least part of modified non-volatile memory area 311 and the at least part of identified non-volatile memory content 301 have different memory addresses. Optionally, computing the respective reconstructed memory content comprises applying the plurality of change instructions of the at least one modification entry to another part of modified non-volatile memory area 311 associated therewith in the at least one modification entry.

In 520, memory access layer 211 optionally provides the respective reconstructed memory content to managed update function 203.

Reference is now made again to FIG. 4.

Optionally, reconstructed memory content 321 is identical to identified non-volatile memory content 301.

In 413, processing unit 110 optionally computes new non-volatile memory content 331, optionally using reconstructed memory content 321 and one or more memory update instructions 325 associated with identified non-volatile memory content 331. Optionally, processing unit 110 receives the one or more memory update instructions in 402, optionally from other processing unit 130, optionally via network interface 111. Reference is now made again to FIG. 5. Optionally, 413 is executed by managed update function 203 in 530.

Reference is now made again to FIG. 4. In 415, processing unit 110 optionally stores new non-volatile memory content 331. Processing unit 110 may store new non-volatile memory content 331 in non-volatile memory 112. Reference is now made again to FIG. 5. Optionally, 415 is executed by managed update function 203 sending request 540 to memory access layer 211. Optionally in response to request 540, in 541 memory access layer 211 optionally stores new non-volatile memory content 331 to non-volatile memory 112. Optionally, in 550 managed update function 203 instructs memory access layer 211 to invalidate temporary change data.

Reference is now made again to FIG. 4.

Optionally, in 420 processing unit 110 executes the plurality of firmware instructions using new non-volatile memory content 331 instead of using modified non-volatile memory content 311. When new non-volatile memory content 331 comprises a new plurality of firmware computer instructions, using new non-volatile memory content 331 instead of using modified non-volatile memory content 311 may comprise executing the new plurality of firmware computer instructions instead of executing the plurality of firmware computer instructions.

In some embodiments, processing unit 110 re-applies the one or more modifications used to generate modified non-volatile memory content 311 to new non-volatile memory content 331, for example by computing an updated plurality of firmware computer instructions using the new plurality of firmware computer instructions and the data change information. In such embodiments, in 420 processing unit 110 executes the updated plurality of firmware computer instructions instead of the plurality of firmware computer instructions.

Optionally, processing unit 110 executes 410, 412 and 413, 415 and 420 in response to receiving the one or more memory update instructions in 402.

As mentioned above, in some embodiments the data change information is computed on device 110. To do so, in some embodiments device 110 implements the following optional method.

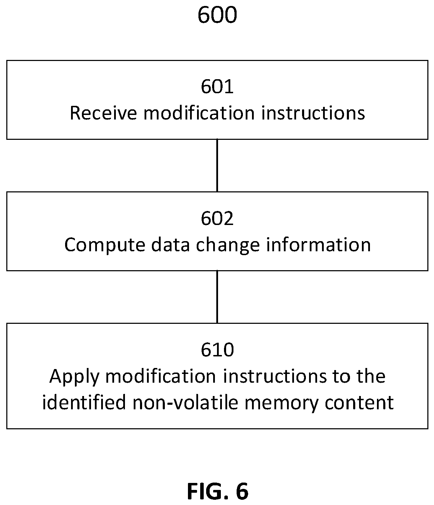

Reference is now made also to FIG. 6, showing a flowchart schematically representing an optional flow of operations 600 for modifying, according to some embodiments. In such embodiments, in 601 processing unit 110 receives one or more modification instructions 305 to apply one or more modifications to identified non-volatile memory content 301. Optionally processing unit 110 receives one or more modification instructions 305 from other processing unit 130 and additionally or alternatively from yet another processing unit (not shown).

Optionally, the data change information is computed in 602.

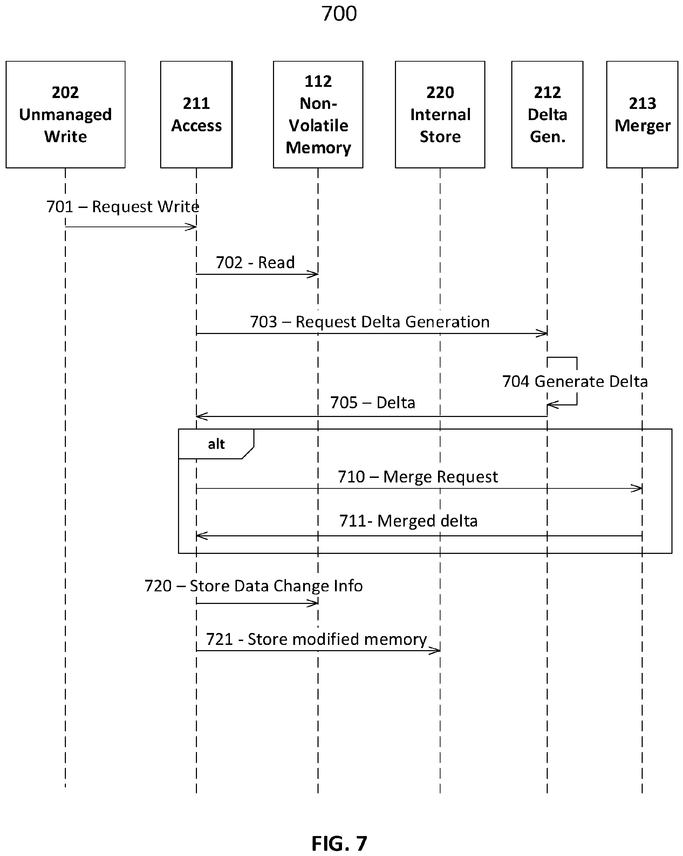

Reference is now made also to FIG. 7, showing a sequence diagram of an optional flow of operations 700 for modifying, according to some embodiments. In such embodiments, unmanaged write function 202 sends write request 701 to memory access layer 211, optionally in response to the one or more modification instructions. Optionally, write request 701 comprises information indicative of at least part of identified non-volatile memory content 301, stored in non-volatile memory 112. Information indicative of at least part of identified non-volatile memory content 301 may be a memory address. Other examples of such information include a label and an offset from an identified memory address. Optionally, write request 701 comprises a modification instruction to apply to the at least part of identified non-volatile memory content 301.

In 702 memory access layer 211 optionally reads the at least part of identified non-volatile memory content 301 from non-volatile memory 112. Optionally, in 702 memory access layer 211 reads another part of identified non-volatile memory content 301. In 703 memory access layer 211 optionally requests delta generator 212 to compute at least some of the data change information and in 704 delta generator 212 optionally computes one or more modification entries using memory read in 702, for example the at least part of identified non-volatile memory content 301 or the other part of identified non-volatile memory content 301, and the modification instruction, optionally providing the one or more modification entries to memory access layer 211 in 705. In 720, memory access layer 211 optionally stores the data change information, optionally in store 220. Optionally, memory access layer 211 stores the data change information in non-volatile memory 112. Optionally, when the data change information comprises a plurality of modification entries, one or more of the plurality of modification entries are compressed when storing to store 220 or non-volatile memory 112.

Reference is now made again to FIG. 6. In 610, processing unit 110 optionally applies the one or more modifications to identified non-volatile memory content 301. Reference is now made again to FIG. 7. Optionally, write request 701 comprises at least part of modified non-volatile memory content 311. In 721, memory access layer optionally stores the at least part of modified non-volatile memory 311 to non-volatile memory 112.

It may be the case that a modification instruction is applied to content of a part of non-volatile memory 112 that was previously modified by an earlier unmanaged modification instruction. In this case, in 710 memory access layer 211 may request merger function 213 to merge the one or more modification entries with other one or more modification entries generated in response to the earlier unmanaged modification instruction. In 711 merger function 213 optionally provides one or more merged modification entries, optionally for storing in store 220 or non-volatile memory 112. This is also referred to as "cascaded modification". When computing a respective part of reconstructed memory content 321, there is no need to access the other one or more modification entries.

Method 600 may be implemented in one of more software objects executed by processing unit 110. Optionally, at least part of method 600 is implemented in memory access circuitry 113.

The descriptions of the various embodiments have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art.

## Claims

1. A configurable computerized device (101) comprising: at least one hardware processor (110) configured for executing a code for updating modified non-volatile memory content by:
accessing data change information (410) indicative of at least one unmanaged modification applied to identified non-volatile memory content and computed when receiving at least one unmanaged modification instruction, where applying the at least one unmanaged modification to the identified non-volatile memory content produces the modified non-volatile memory content used by the at least one hardware processor while executing a plurality of firmware computer instructions; and
updating the modified non-volatile memory content, said updating being **characterized by** comprising :
computing reconstructed memory content (412) using the modified non-volatile memory content, produced by applying the at least one unmanaged modification to the identified non-volatile memory content, and the data change information such that the reconstructed memory content is identical to the identified non-volatile memory content;
computing the updated non-volatile memory content (413) using the reconstructed memory content and at least one managed delta-update, generated by an Original Equipment Manufacturer, OEM, of the configurable computerized device, associated with the identified non-volatile memory content.

2. The configurable computerized device of claim 1, wherein the at least one hardware processor is further configured for storing the new non-volatile memory content to at least one non-volatile memory component connected to the at least one hardware processor.

3. The configurable computerized device of claim 1, wherein the at least one hardware processor is further configured for using the new non-volatile memory content instead of the modified non-volatile memory content when executing the plurality of firmware computer instructions;
wherein the identified non-volatile memory content comprises a first plurality of firmware computer instructions;
wherein the modified non-volatile memory content comprises the plurality of firmware computer instructions, executed by the at least one hardware processor and produced by applying at least some of the at least one modification to the first plurality of firmware computer instructions;
wherein the new non-volatile memory content comprises a new plurality of firmware computer instructions;
wherein using the new non-volatile memory content instead of the modified non-volatile memory content comprises executing the new plurality of firmware computer instructions instead of the plurality of firmware computer instructions; and
wherein the at least one hardware processor is further configured for:
computing an updated plurality of firmware computer instructions using the new plurality of firmware computer instructions and the data change information; and
executing the updated plurality of firmware computer instructions instead of the plurality of firmware computer instructions.

4. The configurable computerized device of claim 1, wherein updating the modified non-volatile memory content is in response to receiving the at least one memory update instruction.

5. The configurable computerized device of claim 1, further comprising at least one digital communication network interface connected to the at least one hardware processor;
wherein the at least one hardware processor is further configured for receiving the at least one memory update instruction via the at least one digital communication network interface.

6. The configurable computerized device of claim 5, wherein the at least one digital communication network interface is connected to a wireless digital communication network.

7. The configurable computerized device of claim 1, wherein the at least one hardware processor is further configured for storing the data change information to at least one non-volatile memory component connected to the at least one hardware processor.

8. The configurable computerized device of claim 1, wherein the data change information comprises a plurality of modification entries, each modification entry comprising one or more of:
(1) at least part of the identified non-volatile memory content and identification information indicative of at least part of the modified non-volatile memory content, associated with the at least part of the identified non-volatile memory content; and
(2) a plurality of change instructions and other identification information indicative of another part of the modified non-volatile memory content associated with the plurality of change instructions.

9. The configurable computerized device of claim 8, wherein the at least one hardware processor is further configured for storing the data change information to at least one non-volatile memory component connected to the at least one hardware processor; and
wherein storing the data change information comprises compressing at least one of the plurality of modification entries.

10. The configurable computerized device of claim 8, wherein computing the reconstructed memory content, for at least some of the modified non-volatile memory content, comprises:
retrieving the at least some of the modified non-volatile memory content;
identifying in the plurality of modification entries at least one modification entry associated with the at least some of the modified non-volatile memory content; and
computing respective reconstructed memory content using the at least one modification entry.

11. The configurable computerized device of claim 8, wherein computing the reconstructed memory content comprises for at least one of the plurality of modification entries at least one of:
replacing at least part of the modified non-volatile memory content with the at least part of the identified non-volatile memory content associated therewith;
applying the plurality of change instructions to the other part of the modified non-volatile memory area associated therewith; and
applying the plurality of change instructions to yet another part of the modified non-volatile memory area.

12. The configurable computerized device of claim 1, wherein the at least one hardware processor is further configured for:
receiving at least one modification instruction to apply the at least one modification to the identified non-volatile memory content;
computing the data change information; and
applying the at least one modification to the identified non-volatile memory content.

13. The configurable computerized device of claim 1, further comprising memory access circuitry adapted for, in each of a plurality of iterations:
receiving information indicative of at least part of the identified non-volatile memory content stored in at least one non-volatile memory component connected to the at least one hardware processor;
receiving a modification instruction to apply to the at least part of the identified non-volatile memory content;
computing one or more modification entries using the at least part of the identified non-volatile memory content and the modification instruction;
modifying the at least part of the identified non-volatile memory content according to the modification instruction; and
storing the one or more modification entries.

14. A method for updating modified non-volatile memory data, comprising:
accessing data change information (410) indicative of at least one unmanaged modification applied to identified non-volatile memory content and computed when receiving at least one unmanaged modification instruction, where applying the at least one modification to the identified non-volatile memory content produces modified non-volatile memory content used by at least one hardware processor when executing a plurality of firmware computer instructions; and
updating the modified non-volatile memory content, said updating being **characterized by** comprising :
computing reconstructed memory content (412) using the modified non-volatile memory content, produced by applying the at least one unmanaged modification to the identified non-volatile memory content, and the data change information such that the reconstructed memory content is identical to the identified non-volatile memory content; and
computing the updated non-volatile memory content (413) using the reconstructed memory content and at least one managed delta- update, generated by an Original Equipment Manufacturer, OEM, of the configurable computerized device, associated with the identified non-volatile memory content.

15. A configurable computerized device of any one of claims 1-13, wherein the configurable computerized device is a vehicle.

## Patentansprüche

1. Konfigurierbare computergestützte Vorrichtung (101), umfassend: mindestens einen Hardware-Prozessor (110), der dazu konfiguriert ist, einen Code zum Aktualisieren eines modifizierten nichtflüchtigen Speicherinhalts durch Folgendes auszuführen:
Zugreifen auf Datenänderungsinformationen (410), die mindestens eine nicht verwaltete Modifikation anzeigen, die auf einen identifizierten nichtflüchtigen Speicherinhalt angewendet wird, und berechnet werden, wenn mindestens eine nicht verwaltete Modifikationsanweisung empfangen wird, wobei das Anwenden der mindestens einen nicht verwalteten Modifikation auf den identifizierten nichtflüchtigen Speicherinhalt den modifizierten nichtflüchtigen Speicherinhalt erzeugt, der von dem mindestens einen Hardware-Prozessor verwendet wird, während eine Vielzahl von Firmware-Computeranweisungen ausgeführt wird; und
Aktualisieren des modifizierten nichtflüchtigen Speicherinhalts, wobei das Aktualisieren **dadurch gekennzeichnet ist, dass** es Folgendes umfasst:
Berechnen eines rekonstruierten Speicherinhalts (412) mithilfe des modifizierten nichtflüchtigen Speicherinhalts, der durch derartiges Anwenden der mindestens einen nicht verwalteten Modifikation auf den identifizierten nichtflüchtigen Speicherinhalt erzeugt wird, und der Datenänderungsinformationen, dass der rekonstruierte Speicherinhalt mit dem identifizierten nichtflüchtigen Speicherinhalt identisch ist;
Berechnen des aktualisierten nichtflüchtigen Speicherinhalts (413) mithilfe des rekonstruierten Speicherinhalts und mindestens einer verwalteten Delta-Aktualisierung, die von einem Originalgerätehersteller, OEM, der konfigurierbaren computergestützten Vorrichtung generiert wird, die mit dem identifizierten nichtflüchtigen Speicherinhalt verknüpft ist.

2. Konfigurierbare computergestützte Vorrichtung nach Anspruch 1, wobei der mindestens eine Hardware-Prozessor ferner dazu konfiguriert ist, den neuen nichtflüchtigen Speicherinhalt in mindestens einer nichtflüchtigen Speicherkomponente zu speichern, die mit dem mindestens einen Hardware-Prozessor verbunden ist.

3. Konfigurierbare computergestützte Vorrichtung nach Anspruch 1, wobei der mindestens eine Hardware-Prozessor ferner dazu konfiguriert ist, den neuen nichtflüchtigen Speicherinhalt anstelle des modifizierten nichtflüchtigen Speicherinhalts zu verwenden, wenn die Vielzahl von Firmware-Computeranweisungen ausgeführt wird;
wobei der identifizierte nichtflüchtige Speicherinhalt eine erste Vielzahl von Firmware-Computeranweisungen umfasst;
wobei der modifizierte nichtflüchtige Speicherinhalt die Vielzahl von Firmware-Computeranweisungen umfasst, die von dem mindestens einen Hardware-Prozessor ausgeführt und durch Anwenden mindestens einiger der mindestens einen Modifikation auf die erste Vielzahl von Firmware-Computeranweisungen erzeugt werden;
wobei der neue nichtflüchtige Speicherinhalt eine neue Vielzahl von Firmware-Computeranweisungen umfasst;
wobei das Verwenden des neuen nichtflüchtigen Speicherinhalts anstelle des modifizierten nichtflüchtigen Speicherinhalts ein Ausführen der neuen Vielzahl von Firmware-Computeranweisungen anstelle der Vielzahl von Firmware-Computeranweisungen umfasst; und
wobei der mindestens eine Hardware-Prozessor ferner zu Folgendem konfiguriert ist:
Berechnen einer aktualisierten Vielzahl von Firmware-Computeranweisungen mithilfe der neuen Vielzahl von Firmware-Computeranweisungen und der Datenänderungsinformationen; und
Ausführen der aktualisierten Vielzahl von Firmware-Computeranweisungen anstelle der Vielzahl von Firmware-Computeranweisungen.

4. Konfigurierbare computergestützte Vorrichtung nach Anspruch 1, wobei das Aktualisieren des modifizierten nichtflüchtigen Speicherinhalts als Reaktion auf ein Empfangen der mindestens einen Speicheraktualisierungsanweisung erfolgt.

5. Konfigurierbare computergestützte Vorrichtung nach Anspruch 1, ferner umfassend mindestens eine digitale Kommunikationsnetzwerkschnittstelle, die mit dem mindestens einen Hardware-Prozessor verbunden ist;
wobei der mindestens eine Hardware-Prozessor ferner dazu konfiguriert ist, die mindestens eine Speicheraktualisierungsanweisung über die mindestens eine digitale Kommunikationsnetzwerkschnittstelle zu empfangen.

6. Konfigurierbare computergestützte Vorrichtung nach Anspruch 5, wobei die mindestens eine digitale Kommunikationsnetzwerkschnittstelle mit einem drahtlosen digitalen Kommunikationsnetzwerk verbunden ist.

7. Konfigurierbare computergestützte Vorrichtung nach Anspruch 1, wobei der mindestens eine Hardware-Prozessor ferner dazu konfiguriert ist, die Datenänderungsinformationen in mindestens einer nichtflüchtigen Speicherkomponente zu speichern, die mit dem mindestens einen Hardware-Prozessor verbunden ist.

8. Konfigurierbare computergestützte Vorrichtung nach Anspruch 1, wobei die Datenänderungsinformationen eine Vielzahl von Modifikationseinträgen umfassen, wobei jeder Modifikationseintrag eines oder mehrere von Folgendem umfasst:
(1) mindestens einen Teil des identifizierten nichtflüchtigen Speicherinhalts und Identifikationsinformationen, die mindestens einen Teil des modifizierten nichtflüchtigen Speicherinhalts anzeigen, die mit dem mindestens einen Teil des identifizierten nichtflüchtigen Speicherinhalts verknüpft sind; und
(2) eine Vielzahl von Änderungsanweisungen und andere Identifikationsinformationen, die einen anderen Teil des modifizierten nichtflüchtigen Speicherinhalts anzeigen, die mit der Vielzahl von Änderungsanweisungen verknüpft sind.

9. Konfigurierbare computergestützte Vorrichtung nach Anspruch 8, wobei der mindestens eine Hardware-Prozessor ferner dazu konfiguriert ist, die Datenänderungsinformationen in mindestens einer nichtflüchtigen Speicherkomponente zu speichern, die mit dem mindestens einen Hardware-Prozessor verbunden ist; und
wobei das Speichern der Datenänderungsinformationen ein Komprimieren mindestens eines der Vielzahl von Modifikationseinträgen umfasst.

10. Konfigurierbare computergestützte Vorrichtung nach Anspruch 8, wobei das Berechnen des rekonstruierten Speicherinhalts für mindestens einiges des modifizierten nichtflüchtigen Speicherinhalts Folgendes umfasst:
Abrufen des mindestens einigen des modifizierten nichtflüchtigen Speicherinhalts;
Identifizieren in der Vielzahl von Modifikationseinträgen mindestens eines Modifikationseintrags, der mit dem mindestens einigen des modifizierten nichtflüchtigen Speicherinhalts verknüpft ist; und
Berechnen eines jeweiligen rekonstruierten Speicherinhalts mithilfe des mindestens einen Modifikationseintrags.

11. Konfigurierbare computergestützte Vorrichtung nach Anspruch 8, wobei das Berechnen des rekonstruierten Speicherinhalts für mindestens einen der Vielzahl von Modifikationseinträgen mindestens eines von Folgendem umfasst:
Ersetzen mindestens eines Teils des modifizierten nichtflüchtigen Speicherinhalts durch den mindestens einen Teil des identifizierten nichtflüchtigen Speicherinhalts, der damit verknüpft ist;
Anwenden der Vielzahl von Änderungsanweisungen auf den anderen Teil des modifizierten nichtflüchtigen Speicherbereichs, der damit verknüpft ist; und
Anwenden der Vielzahl von Änderungsanweisungen auf noch einen anderen Teil des modifizierten nichtflüchtigen Speicherbereichs.

12. Konfigurierbare computergestützte Vorrichtung nach Anspruch 1, wobei der mindestens eine Hardware-Prozessor ferner zu Folgendem konfiguriert ist:
Empfangen mindestens einer Modifikationsanweisung, um die mindestens eine Modifikation auf den identifizierten nichtflüchtigen Speicherinhalt anzuwenden;
Berechnen der Datenänderungsinformationen; und
Anwenden der mindestens einen Modifikation auf den identifizierten nichtflüchtigen Speicherinhalt.

13. Konfigurierbare computergestützte Vorrichtung nach Anspruch 1, ferner umfassend eine Speicherzugriffsschaltung, die dazu ausgebildet ist, in jeder einer Vielzahl von Iterationen Folgendes durchzuführen:
Empfangen von Informationen, die mindestens einen Teil des identifizierten nichtflüchtigen Speicherinhalts anzeigen, der in mindestens einer nichtflüchtigen Speicherkomponente gespeichert ist, die mit dem mindestens einen Hardware-Prozessor verbunden ist;
Empfangen einer Modifikationsanweisung, die auf den mindestens einen Teil des identifizierten nichtflüchtigen Speicherinhalts anzuwenden ist;
Berechnen eines oder mehrerer Modifikationseinträge mithilfe des mindestens einen Teils des identifizierten nichtflüchtigen Speicherinhalts und der Modifikationsanweisung;
Modifizieren des mindestens einen Teils des identifizierten nichtflüchtigen Speicherinhalts gemäß der Modifikationsanweisung; und
Speichern des einen oder der mehreren Modifikationseinträge.

14. Verfahren zum Aktualisieren modifizierter nichtflüchtiger Speicherdaten, umfassend:
Zugreifen auf Datenänderungsinformationen (410), die mindestens eine nicht verwaltete Modifikation anzeigen, die auf einen identifizierten nichtflüchtigen Speicherinhalt angewendet wird, und berechnet werden, wenn mindestens eine nicht verwaltete Modifikationsanweisung empfangen wird, wobei das Anwenden der mindestens einen Modifikation auf den identifizierten nichtflüchtigen Speicherinhalt modifizierten nichtflüchtigen Speicherinhalt erzeugt, der von mindestens einem Hardware-Prozessor verwendet wird, wenn eine Vielzahl von Firmware-Computeranweisungen ausgeführt wird; und
Aktualisieren des modifizierten nichtflüchtigen Speicherinhalts, wobei das Aktualisieren **dadurch gekennzeichnet ist, dass** es Folgendes umfasst:
Berechnen eines rekonstruierten Speicherinhalts (412) mithilfe des modifizierten nichtflüchtigen Speicherinhalts, der durch derartiges Anwenden der mindestens einen nicht verwalteten Modifikation auf den identifizierten nichtflüchtigen Speicherinhalt erzeugt wird, und der Datenänderungsinformationen, dass der rekonstruierte Speicherinhalt mit dem identifizierten nichtflüchtigen Speicherinhalt identisch ist; und
Berechnen des aktualisierten nichtflüchtigen Speicherinhalts (413) mithilfe des rekonstruierten Speicherinhalts und mindestens einer verwalteten Delta-Aktualisierung, die von einem Originalgerätehersteller, OEM, der konfigurierbaren computergestützten Vorrichtung generiert wird, die mit dem identifizierten nichtflüchtigen Speicherinhalt verknüpft ist.

15. Konfigurierbare computergestützte Vorrichtung nach einem der Ansprüche 1-13, wobei die konfigurierbare computergestützte Vorrichtung ein Fahrzeug ist.

## Revendications

1. Dispositif informatique configurable (101) comprenant : au moins un processeur matériel (110) configuré pour exécuter un code permettant de mettre à jour un contenu de mémoire non volatile modifié par :
l'accès à des informations de changement de données (410) indicatives d'au moins une modification non gérée appliquée à un contenu de mémoire non volatile identifié et calculée lors de la réception d'au moins une instruction de modification non gérée, où l'application de l'au moins une modification non gérée au contenu de mémoire non volatile identifié produit le contenu de mémoire non volatile modifié utilisé par l'au moins un processeur matériel lors de l'exécution d'une pluralité d'instructions informatiques de micrologiciel ; et
la mise à jour du contenu de mémoire non volatile modifié, ladite mise à jour étant **caractérisée en ce qu'**elle comprend :
le calcul d'un contenu de mémoire reconstruit (412) à l'aide du contenu de mémoire non volatile modifié, produit par l'application de l'au moins une modification non gérée au contenu de mémoire non volatile identifié, et des informations de changement de données de sorte que le contenu de mémoire reconstruit est identique au contenu de mémoire non volatile identifié ;
le calcul du contenu de mémoire non volatile mis à jour (413) à l'aide du contenu de mémoire reconstruit et d'au moins une mise à jour delta gérée, générée par un fabricant d'équipement d'origine, OEM, du dispositif informatique configurable, associé au contenu de mémoire non volatile identifié.

2. Dispositif informatique configurable selon la revendication 1, dans lequel l'au moins un processeur matériel est également configuré pour stocker le nouveau contenu de mémoire non volatile dans au moins un composant de mémoire non volatile relié à l'au moins un processeur matériel.

3. Dispositif informatique configurable selon la revendication 1, dans lequel l'au moins un processeur matériel est également configuré pour utiliser le nouveau contenu de mémoire non volatile au lieu du contenu de mémoire non volatile modifié lors de l'exécution de la pluralité d'instructions informatiques de micrologiciel ;
dans lequel le contenu de mémoire non volatile identifié comprend une première pluralité d'instructions informatiques de micrologiciel ;
dans lequel le contenu de mémoire non volatile modifié comprend la pluralité d'instructions informatiques de micrologiciel, exécutées par l'au moins un processeur matériel et produites par l'application d'au moins une partie de l'au moins une modification à la première pluralité d'instructions informatiques de micrologiciel ;
dans lequel le nouveau contenu de mémoire non volatile comprend une nouvelle pluralité d'instructions informatiques de micrologiciel ;
dans lequel l'utilisation du nouveau contenu de mémoire non volatile au lieu du contenu de mémoire non volatile modifié comprend l'exécution de la nouvelle pluralité d'instructions informatiques de micrologiciel au lieu de la pluralité d'instructions informatiques de micrologiciel ; et
dans lequel l'au moins un processeur matériel est également configuré pour :
calculer une pluralité mise à jour d'instructions informatiques de micrologiciel à l'aide de la nouvelle pluralité d'instructions informatiques de micrologiciel et des informations de changement de données ; et
exécuter la pluralité mise à jour d'instructions informatiques de micrologiciel au lieu de la pluralité d'instructions informatiques de micrologiciel.

4. Dispositif informatique configurable selon la revendication 1, dans lequel la mise à jour du contenu de mémoire non volatile modifié est en réponse à la réception de l'au moins une instruction de mise à jour de mémoire.

5. Dispositif informatique configurable selon la revendication 1, comprenant également au moins une interface de réseau de communication numérique reliée à l'au moins un processeur matériel ;
dans lequel l'au moins un processeur matériel est également configuré pour recevoir l'au moins une instruction de mise à jour de mémoire via l'au moins une interface de réseau de communication numérique.

6. Dispositif informatique configurable selon la revendication 5, dans lequel l'au moins une interface de réseau de communication numérique est reliée à un réseau de communication numérique sans fil.

7. Dispositif informatique configurable selon la revendication 1, dans lequel l'au moins un processeur matériel est également configuré pour stocker les informations de changement de données dans au moins un composant de mémoire non volatile relié à l'au moins un processeur matériel.

8. Dispositif informatique configurable selon la revendication 1, dans lequel les informations de changement de données comprennent une pluralité d'entrées de modification, chaque entrée de modification comprenant un ou plusieurs des éléments suivants :
(1) au moins une partie du contenu de mémoire non volatile identifié et des informations d'identification indicatives d'au moins une partie du contenu de mémoire non volatile modifié, associées à l'au moins une partie du contenu de mémoire non volatile identifié ; et
(2) une pluralité d'instructions de changement et d'autres informations d'identification indicatives d'une autre partie du contenu de mémoire non volatile modifié associé à la pluralité d'instructions de changement.

9. Dispositif informatique configurable selon la revendication 8, dans lequel l'au moins un processeur matériel est également configuré pour stocker les informations de changement de données dans au moins un composant de mémoire non volatile relié à l'au moins un processeur matériel ; et
dans lequel le stockage des informations de changement de données comprend la compression d'au moins une de la pluralité d'entrées de modification.

10. Dispositif informatique configurable selon la revendication 8, dans lequel le calcul du contenu de mémoire reconstruit, pour au moins une partie du contenu de mémoire non volatile modifié, comprend :
la récupération de l'au moins une partie du contenu de mémoire non volatile modifié ;
l'identification, dans la pluralité d'entrées de modification, d'au moins une entrée de modification associée à l'au moins une partie du contenu de mémoire non volatile modifié ; et
le calcul d'un contenu de mémoire reconstruit respectif à l'aide de l'au moins une entrée de modification.

11. Dispositif informatique configurable selon la revendication 8, dans lequel le calcul du contenu de mémoire reconstruit comprend pour au moins une de la pluralité d'entrées de modification au moins un des éléments suivants :
le remplacement d'au moins une partie du contenu de mémoire non volatile modifié par l'au moins une partie du contenu de mémoire non volatile identifié qui y est associé ;
l'application de la pluralité d'instructions de changement à l'autre partie de la zone de mémoire non volatile modifiée qui y est associée ; et
l'application de la pluralité d'instructions de changement à encore une autre partie de la zone de mémoire non volatile modifiée.

12. Dispositif informatique configurable selon la revendication 1, dans lequel l'au moins un processeur matériel est également configuré pour :
recevoir au moins une instruction de modification pour appliquer l'au moins une modification au contenu de mémoire non volatile identifié ;
calculer les informations de changement de données ; et
appliquer l'au moins une modification au contenu de mémoire non volatile identifié.

13. Dispositif informatique configurable selon la revendication 1, comprenant également un circuit d'accès à la mémoire conçu pour, dans chacune d'une pluralité d'itérations :
recevoir des informations indicatives d'au moins une partie du contenu de mémoire non volatile identifié stocké dans au moins un composant de mémoire non volatile relié à l'au moins un processeur matériel ;
recevoir au moins une instruction de modification à appliquer à l'au moins une partie du contenu de mémoire non volatile identifié ;
calculer une ou plusieurs entrées de modification à l'aide de l'au moins une partie du contenu de mémoire non volatile identifié et de l'instruction de modification ;
modifier l'au moins une partie du contenu de mémoire non volatile identifié selon l'instruction de modification ; et
stocker les une ou plusieurs entrées de modification.

14. Procédé de mise à jour de données de mémoire non volatile modifiées, comprenant :
l'accès à des informations de changement de données (410) indicatives d'au moins une modification non gérée appliquée à un contenu de mémoire non volatile identifié et calculée lors de la réception d'au moins une instruction de modification non gérée, où l'application de l'au moins une modification au contenu de mémoire non volatile identifié produit un contenu de mémoire non volatile modifié utilisé par au moins un processeur matériel lors de l'exécution d'une pluralité d'instructions informatiques de micrologiciel ; et
la mise à jour du contenu de mémoire non volatile modifié, ladite mise à jour étant **caractérisée en ce qu'**elle comprend :
le calcul d'un contenu de mémoire reconstruit (412) à l'aide du contenu de mémoire non volatile modifié, produit par l'application de l'au moins une modification non gérée au contenu de mémoire non volatile identifié, et des informations de changement de données de sorte que le contenu de mémoire reconstruit est identique au contenu de mémoire non volatile identifié ; et
le calcul du contenu de mémoire non volatile mis à jour (413) à l'aide du contenu de mémoire reconstruit et d'au moins une mise à jour delta gérée, générée par un fabricant d'équipement d'origine, OEM, du dispositif informatique configurable, associé au contenu de mémoire non volatile identifié.

15. Dispositif informatique configurable selon l'une quelconque des revendications 1 à 13, dans lequel le dispositif informatique configurable est un véhicule.
